# EUROPÄISCHE PATENTSCHRIFT

(11) **EP 1 333 210 B1**
(45) Veröffentlichungstag und Bekanntmachung des Hinweises auf die Patenterteilung: **08.05.2019**
(21) Anmeldenummer: 03001422.9
(22) Anmeldetag: 22.01.2003
(51) Int. Cl.: B29C 35/04, B29C 63/00, B29C 63/06, B29C 70/08, B29D 23/00, B29K 27/12, B29K 27/18, B29K 105/18, B29K 105/06, B29K 309/08, B29L 9/00, B29L 23/00, B29K 307/00, B32B 1/08, F16L 9/12

(54) **Verbundrohr aus einer PTFE-Innenschicht und einer Deckschicht aus einem faserverstärkten Kunststoff**
Composite pipe with a PTFE inner layer and a fibre-reinforced plastic outer layer
Tuyau composite avec une couche intérieure en PTFE avec une couche supérieure renforcé par des fibres

(30) Priorität: 25.01.2002 DE 10203123
(43) Veröffentlichungstag der Anmeldung: 06.08.2003
(73) Patentinhaber: Steuler Korrosionsschutz Holding GmbH, 56427 Siershahn (DE)
(72) Erfinder: Troschitz, Ralf, 56179 Vallendar (DE); Schmidt, Willibald, 56414 Berod (DE); Weisenfeld, Heribert, 56414 Berod (DE)
(74) Vertreter: Keller, Günter

(56) Entgegenhaltungen:
- EP-A- 0 391 568
- WO-A-95/13186
- DE-A- 19 841 121
- DATABASE WPI Section Ch, Week 199739 Derwent Publications Ltd., London, GB; Class A14, AN 1997-419897 XP002242861 & JP 09 187865 A (DAIKIN KOGYO KK), 22. Juli 1997 (1997-07-22)

## Beschreibung

Die Erfindung bezieht sich auf ein Verbundrohr, bestehend aus einer Innenschicht aus einem Polytetrafluorethylen (PTFE) und einer Deckschicht aus faserverstärktem Kunststoff, die über eine Zwischenlage kraft- und formschlüssig miteinander verbunden sind.

Insbesondere in der chemischen Industrie werden zum Transport von Flüssigkeiten und Gasen Verbundrohre verwendet, die aus einer Innenschicht und einer Deckschicht bestehen.

Als Innenschicht wird dabei ein Rohr aus thermoplastischem Kunststoff verwendet, wobei der Kunststoff aufgrund der Eigenschaften des Transportmediums ausgewählt wird. Heutzutage kommen hauptsächlich Kunststoffrohre aus Polypropylen (PP), Polyvinylchlorid (PVC) und Polyvinylidenfluorid (PVDF) zum Einsatz. Aufgrund der steigenden Anforderungen an Sicherheit und Leistungsfähigkeit werden höhere Temperatur- und Medienbeständigkeit der eingesetzten thermoplastischen Werkstoffe verlangt. Vollfluorierte Kunststoffe wie Perfluorethylenpropylen (FEP), Perfluoralkoxy-Tetrafluorethylen (PFA) oder auch Polytetrafluorethylen (PTFE) erfüllen diese steigenden Anforderungen. PTFE hat dabei durch seinen günstigen Preis eine besondere Rolle.

Die Wanddicke einer aus einem solchem Kunststoffrohr gebildeten Innenschicht beträgt etwa 2 bis 8 mm. Ein derartiges Kunststoffrohr kann insbesondere bei höheren Temperaturen nur einen geringen Überdruck aufnehmen. Es ist deshalb erforderlich, die thermoplastischen Kunststoffrohre mit einer tragenden Deckschicht zu versehen, welche aus einem mit Glas- oder Kohlenstofffasern verstärktem duroplastischen Kunststoff besteht.

Diese tragende Deckschicht aus verstärktem duroplastischen Kunststoff geht nur mit Zusatzaufwand eine innige Verbindung mit der thermoplastischen Innenschicht ein. Um dennoch ausreichende Haft- und Scherfestigkeiten zwischen Innen- und Deckschicht zu erreichen, werden unterschiedliche Zwischenlagen verwendet. Nach DIN 16 964 werden für Verbündrohre mit thermoplastischer Innenschicht folgende Haftscherfestigkeiten bei Segmentscherversuchen (Verfahren B) gefordert:

| Werkstoff der Innenschicht | Haftscherfestigkeit [N/mm²] |
|---|---|
| PVC | 7 |
| PE-HD | 2,5 |
| PP | 3,5 |
| PVDF | 5 |

In der japanischen Patentschrift JP 02035287 werden Rohre als Innenschicht aus verschiedenen thermoplastischen Kunststoffen genannt, etwa PVC, Polyamid, Acrylharze, Polycarbonate usw. Diese thermoplastischen Kunststoffrohre werden z.B. mit Hilfe von Isophtalsäureharzen mit der duroplastischen Deckschicht des Verbundrohres verklebt, wobei die Isophtalsäureharze aus Verbindungen bestehen, die eine Isocyanatgruppe enthalten. Der Nachteil des Verfahrens besteht darin, -dass PTFE im allgemeinen nicht verklebbar ist.

WO 95/13186 offenbart Schichtlaminate, aufgebaut aus einem Elastomer, einem nichtelastomeren Fluoropolymer und einem weiteren Elastomer, zur Herstellung von Schläuchen und Diaphragmen mit ausgezeichneter Flexibilität und hoher Benzinpermeationsresistenz.

EP 0 391 568 A2 offenbart ein Schichtmaterial umfassend eine erste Schicht aus einer Fluorpolymerzusammensetzung, eine zweite Schicht aus einem Stützmaterial und eine dritte Schicht aus einer Fluorpolymerzusammensetzung, wobei die Fluorpolymerzusammensetzung der ersten und dritten Schicht eine Mischung eines thermoplastischen Copolymers aus Tetrafluorethylen und Perfluoro(propylvinylether)monomeren und entweder eines amorphen thermoplastischen Polymers oder Polytetrafluoroethylengranulat umfasst, wobei das thermoplastische Copolymer 50 bis 90 Gew.-% des Copolymers und des amorphen Polymers oder des Polytetrafluorethylens ausmacht.

JP 09187865 A betrifft eine mit Fluorharz laminierte Röhre enthaltend eine Schicht aus durch Copolymerisation mit 0,1 bis 1 Mol-% an Perfluoro(alkylvinylether) oder Perfluoro(alkylethylen)monomeren modifiziertes Polytetrafluorethylen (PTFE), das an die innere und/oder die äußere Seite der Röhre, die aus dem modifizierten PTFE, enthaltend einen zu integrierenden Füllstoff, hergestellt ist, geschmolzen wird.

Bestehen die Rohre der Innenschicht aus Polyolefinen, so wird im Normalfall ein Glasfasergewebe als Zwischenschicht gewählt. Diese Glasfasergewebe sind mechanisch auf der Oberfläche der Innenschicht verankert. Praktisch erfolgt die Verankerung in der Weise, dass die Oberfläche der die Innenschicht bildenden Polyolefin-Rohre angeschmolzen und in diese angeschmolzene Oberfläche ein endloses Glasgewebeband unter Zug und - bezogen auf die Rohrlängsachse - spiralförmig teilweise eingebettet wird. Der aus der Oberfläche der Innenschicht herausragende Teil des Fasergewebes wird dann mit dem für die tragende Deckschicht benötigten Reaktionsharz benetzt. Danach wird die Deckschicht aus den mit Kunststoff getränkten Glasfasern erzeugt. Im folgenden Schritt härtet die Deckschicht zusammen mit der Zwischenschicht aus Dieser Aufbau ist in der Werknorm 1250 Teil 2 der Bayer AG dargestellt. In der deutschen Patentanmeldung DE 198 41 121 wird eine Zwischenschicht beschrieben, die neben den Glasfasern thermoplastische Kunststofffasern enthält. Aus beiden Faserarten hergestellte Gewebe werden in die Zwischenschicht eingebracht. Der Kunststoff der thermoplastischen Kunststofffasern ist so ausgewählt, dass er mit dem Kunststoff der Innerischicht des Verbundrohres verschweißt werden kann. Hierdurch können etwa beim Einsatz von Polypropylen-Innenschichten Verbundrohre mit doppelt so hohen Haftscherfestigkeiten hergestellt werden wie bei Verbundrohren mit einer Zwischenschicht, die nur aus Glasfasergewebeband besteht. Bei vielen Einsatzfällen in der chemischen Industrie reicht die Temperatur- und Medienbeständigkeit dieser Innenschichtwerkstoffe allerdings nicht aus.

Bei teilfluorierten Kunststoffen wie PVDF werden üblicherweise Innenschichten mit aktivierter Oberfläche ("geätzte Rohre") eingesetzt, um eine Haftwirkung zur Deckschicht zu erreichen. Das Einschmelzen von Glasgewebeband in die Oberfläche der PVDF-Innenschicht ist aufwändig und wird daher im Normalfall vermieden.

Aufgrund der hohen Temperaturbeständigkeit der vollfluorierten Polymere ist es bei dieser Klasse von Kunststoffen noch weitaus aufwendiger ein Glasgewebeband aufzubringen. Ein besonderes Problem stellen hierbei Innenrohre aus dem vergleichsweise kostengünstigen PTFE dar, denn die zur Einbettung benötigte Schmelzviskosität ist bei diesem Werkstofftyp sehr hoch. Die einzelnen Kristallite im PTFE schmelzen zwar ab einer bestimmten Temperatür, makromechanisch betrachtet findet aber keine Verflüssigung statt, vielmehr wird bei einem weiteren Temperaturanstieg das PTFE zersetzt. Gelingt die Einbettung der Fasern trotz der geringen Schmelzviskosität, so werden nur geringe Scherfestigkeiten zwischen PTFE-Körper und Faserprodukt erzielt. So konnten mit derart hergestellten Proben nur Scherfestigkeiten von etwa 1 N/mm² gemessen werden und liegen damit weit unter den nach DIN 16 964 geforderten Festigkeiten. Eine chemische Oberflächenbehandlung bei PTFE-Rohren scheidet aus Gründen der Umweltverträglichkeit ebenfalls im Normalfall aus, zudem konnten mit diesem Verfahren keine höheren Festigkeiten erreicht werden. Gleichfalls scheidet aufgrund des antiadhäsiven Werkstoffverhaltens ein Verkleben von Innenschicht und Deckschicht aus.

Der Erfindung liegt deshalb die Aufgabe zugrunde, ein Verbundrohr aus faserverstärktem Kunststoff und einer PTFE-Innenschicht zu schaffen, bei dem die Haft- und Scherfestigkeit zwischen der Innenschicht aus PTFE und der Deckschicht aus faserverstärktem Kunststoff erheblich verbessert wird.

Zur Lösung dieser Aufgabe wird gemäß der Erfindung bei einem Verbundrohr der eingangs beschriebenen Gattung vorgeschlagen, anstatt einer Oberflächenbehandlung der PTFE-Innenschicht oder anstatt einer Verklebung oder anstatt einer Einbettung eines Glasfasergewebes an der Oberfläche der Innenschicht eine spezielle Zwischenlage zwischen Innenschicht und Deckschicht einzusetzen. Diese Zwischenlage besteht auf der der Innenschicht zugewandten Seite aus PFA und auf der der Deckschicht zugewandten Seite aus textilen Glas- oder Kohlenstofffaser-Produkten, vorzugsweise aus Gewebe.

Das PFA der Zwischenlage kann besonders gut mit der äußeren Oberfläche der PTFE-Innenschicht verschweißt werden. Ursachen sind der ähnliche chemische Aufbau der beiden fluorhaltigen Kunststoffe und dicht beieinander liegende beziehungsweise überlappenden Temperaturbereiche für das Schmelzen bzw. Sintern. Da die Fügung von PTFE-Innenschicht und hybrider Zwischenlage unter Druckbeaufschlagung stattfindet, wird das Auftreten von Delaminationen im gesamten Verbund Innenschicht Zwischenlage zuverlässig verhindert. Hierdurch werden Haft- und Scherfestigkeiten erzielt; die erheblich über den nach DIN 16 964 geforderten Festigkeiten (bei PVDF 5 N/mm²) liegen. Andere Vorteile des erfindungsgemäßen Verbundrohres aus PTFE-Innenschicht, Zwischenlage und faserverstärkter Kunststoff-Deckschicht sind die folgenden: Es können Rohrleitungssysteme ohne Flanschverbindungen ausgeführt werden. Dies hat den Vorteil; dass die hinsichtlich Leckage kritischen Flansche entfallen. Weiterhin werden Kosten und Gewicht eingespart.

Die Erfindung wird nachfolgend anhand einer schematischen Zeichnung näher,erläutert.

In dieser Zeichnung ist die Wandung 1 eines Rohres aus PTFE im Schnitt gezeigt, welches die Innenschicht des Verbundrohres bildet. Die äußere Oberfläche des aus PTFE bestehenden Kunststoffrohres wird nun mittels Heißluft derart erwärmt, bis diese Oberfläche 6 weich wird. Jetzt wird auf diese Oberfläche 6 eine ebenfalls erwärmte Zwischenlage 2 mit geringem Zug längs der Rohrachse spiralförmig unter zusätzlicher Druckbelastung aufgewickelt. Die Zwischenlage 2 weist eine Dicke von 0,5 bis 3 mm auf, wobei aus verarbeitungstechnischen Gründen eine Dicke von 1 bis 2 mm vorteilhaft ist. Sie besteht auf der der PTFE-Innenschicht 1 zugewandten Seite 3 aus einer Schicht bestehend aus PFA und wird beim Aufwickeln mit der Oberfläche 6 des PTFE-Rohres verschweißt. Dadurch wird die Zwischenlage 2 fest mit der äußeren Oberfläche 6 der Innenschicht 1 verbunden. Auf der so mit der Innenschicht 1 verankerten Zwischenlage 2 wird dann in an sich bekannter Weise die Deckschicht 5 aus faserverstärktem Kunststoff erzeugt. Die Haftung zwischen Zwischenlage 2 und Deckschicht 5 ergibt sich durch das aus der Oberfläche 7 der Zwischenlage herausragende textile Produkt - vorzugsweise Gewebe 4 - aus Kohlenstoff- bzw. Glasfasern.

Bei in dieser Art hergestellten Verbundrohren mit PTFE-Innenschicht konnten Scherfestigkeiten zwischen Deckschicht und Innenschicht gemessen werden, die etwa um den Faktor 10 (zehn) höher liegen als bei herkömmlichen Verbundrohren mit PTFE-Innenschicht und chemisch vorbehandelter äußerer Oberfläche, Verklebung bzw. "eingeschweißtem Glasgewebeband" .

Im einzelnen wurden an den erfindungsgemäßen Verbundrohren als Mittelwert 9,7 N/mm² für die Haftscherfestigkeit nach DIN 53 769 - B bei einer Standardabweichung von 1,2 N/mm² gemessen. Selbst Temperaturwechselbelastungsversuche von 20 bis 200 °C zeigten - bei der Verwendung von hochtemperaturbes.tändigen Harzen in der Deckschicht - keine Verminderung der Scherfestigkeiten.

### Bezugszeichenliste

- 1: PTFE-Innenrohr
- 2: Zwischenlage aus PFA mit Verstärkungsgewebe
- 3: PFA-Schicht der Zwischenlage
- 4: Verstärkungsgewebe der Zwischenlage
- 5: Deckschicht aus faserverstärktem Kunststoff
- 6: Oberfläche des PTFE-Innenrohres
- 7: Innere Oberfläche der Deckschicht

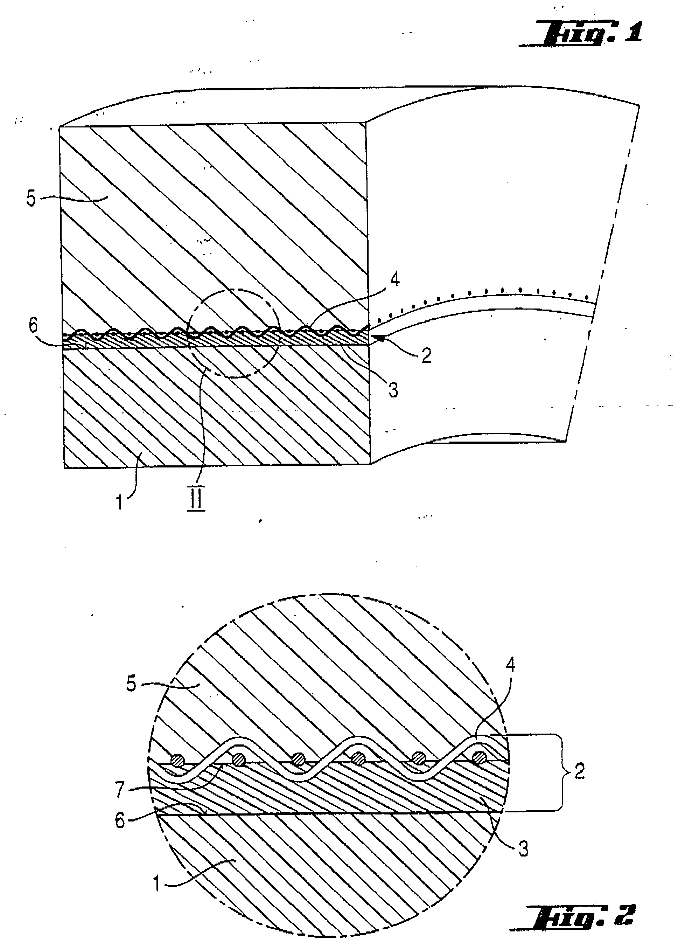

## Patentansprüche

1. Verbundrohr, bestehend aus einer PTFE-Innenschicht und einer Deckschicht aus faserverstärktem Kunststoff, die über eine Zwischenlage stoff- und formschlüssig miteinander verbunden sind, **dadurch gekennzeichnet, dass** die Zwischenlage **2** auf einer Seite mit einer Oberfläche aus Perfluoralkoxy-Tetrafluorethylen (PFA) **3** und auf der anderen Seite mit einem textilen Produkt **4** aus Glas- oder Kohlenstofffasern ausgerüstet ist.

2. Verbundrohr nach Anspruch 1, **dadurch gekennzeichnet, dass** die PFA-Schicht der Zwischenlage mit der äußeren Oberfläche der PTFE-Innenschicht **6** des Verbundrohres verschweißt ist.

3. Verbundrohr nach den Ansprüchen 1 und 2, **dadurch gekennzeichnet, dass** das textile Produkt der Zwischenlage **2** vorzugsweise ein Gewebe ist.

4. Verbundrohr nach den Ansprüchen 1 bis 3, **dadurch gekennzeichnet, dass** für die Innenschicht auch antistatisch eingestelltes PTFE-Material bzw. antistatisch eingestellte Deckschichten eingesetzt werden können.

5. Verbundrohr nach den Ansprüchen 1 bis 4, **dadurch gekennzeichnet, dass** die Haftscherfestigkeit zwischen Innenschicht und Deckschicht nach DIN 53 769 - B im Mittel bei bis zu über 9 N/mm² liegt.

## Claims

1. A composite tube consisting of a PTFE inner layer and a top layer of fiber-reinforced plastic that are interconnected via an intermediate layer in a material- and form-fit manner, **characterized in that** the intermediate layer 2 on one side is equipped with a surface of perfluoroalkoxy-tetrafluoroethylene (PFA) 3 and on the other side with a textile product 4 of glass or carbon fibers.

2. The composite tube according to claim 1, **characterized in that** the PFA layer of the intermediate layer is welded to the outer surface of the PTFE inner layer 6 of the composite tube.

3. The composite tube according to any of claims 1 and 2, **characterized in that** the textile product of the intermediate layer 2 preferably is a fabric.

4. The composite tube according to any of claims 1 to 3, **characterized in that** for the inner layer also anti-static PTFE material or antistatic top layers can be used.

5. The composite tube according to any of claims 1 to 4, **characterized in that** the adhesive shear strength between the inner layer and the top layer according to DIN 53 769 - B on average is up to above 9 N/mm².

## Revendications

1. Tube composite constitué d'une couche interne de PTFE et d'une couche de recouvrement en matière plastique renforcée par des fibres, qui sont reliées l'une à l'autre via une couche intermédiaire par adhérence et adaptation de formes, **caractérisé en ce que** la couche intermédiaire 2 est pourvue, sur une face, d'une surface de perfluoralcoxy-tétrafluoréthylène (PFA) 3 et, sur l'autre face, d'un produit textile 4 de fibres de verre ou de carbone.

2. Tube selon la revendication 1, **caractérisé en ce que** la couche de PFA de la couche intermédiaire est soudée à la surface externe de la couche interne de PTFE 6 du tube composite.

3. Tube composite selon les revendications 1 et 2, **caractérisé en ce que** le produit textile de la couche intermédiaire 2 est de préférence un tissu.

4. Tube composite selon les revendications 1 à 3, **caractérisé en ce que** l'on peut utiliser pour la couche interne également un matériau de type PTFE traité antistatique ou des couches de recouvrements traitées antistatiques.

5. Tube composite selon les revendications 1 à 4, **caractérisé en ce que** la contrainte de cisaillement à l'adhérence entre la couche interne et la couche de recouvrement selon la norme DIN 53 769-B se situe en moyenne à une valeur allant jusqu'à plus de 9 N/mm².
